# EUROPÄISCHE PATENTSCHRIFT

(11) **EP 3 743 187 B1**
(45) Veröffentlichungstag und Bekanntmachung des Hinweises auf die Patenterteilung: **17.11.2021**
(21) Anmeldenummer: 19703018.2
(22) Anmeldetag: 23.01.2019
(51) Int. Cl.: B01D 29/21, B01D 46/52

(54) **FILTERMODUL**
FILTER MODULE
MODULE FILTRANT

(30) Priorität: 26.01.2018 DE 102018101804
(43) Veröffentlichungstag der Anmeldung: 02.12.2020
(73) Patentinhaber: Sartorius Stedim Biotech GmbH, 37079 Göttingen (DE)
(72) Erfinder: NIKOLOUDIS, Paschalis, 37079 Göttingen (DE); Dr. LOEWE, Thomas, 37077 Göttingen (DE); FRIESE, Thomas, 99752 Bleicherode (DE); HANDT, Sebastian, 37127 Dransfeld (DE)
(74) Vertreter: Vigand, Philippe
(86) Internationale Anmeldenummer: PCT/EP2019/051626
(87) Internationale Veröffentlichungsnummer: WO 2019/145358

(56) Entgegenhaltungen:
- DE-A1-102012 022 285
- JP-A- 2007 050 313
- SU-A1- 436 668
- US-A- 3 022 861
- US-A1- 2010 089 819
- US-A1- 2010 243 554

## Beschreibung

### Gebiet der Erfindung

Die Erfindung bezieht sich auf ein Filtermodul, umfassend ein durchbrochenes Innenrohr und ein das Innenrohr konzentrisch umgreifendes, durchbrochenes Außenrohr, die zwischen sich einen Ringspalt bilden, in welchem eine in Falten plissierte Filtermembran angeordnet ist, deren in mehrere Faltenarten unterschiedlicher Faltenhöhe unterteilte Falten sich von ihren jeweiligen, am Außenrohr anliegenden Faltenkanten in Richtung auf das Innenrohr zu ihrer jeweiligen Faltenspitze hin erstrecken und als Gruppen von Falten unterschiedlicher Faltenarten - vorzugsweise in periodischer Abfolge - entlang des Umfangs des Ringspaltes angeordnet sind.

### Stand der Technik

Derartige Filtermodule sind bekannt aus der US 2010/0089819 A1.

Gattungsgemäße Filtermodule finden in den unterschiedlichsten Industriebereichen Einsatz. Bei Betrieb wird zu filtrierende Flüssigkeit im Wesentlichen radial durch das Filtermodul gepumpt. Insbesondere kann Flüssigkeit unter Überdruck axial in das ausgangsseitig geschlossene Innenrohr gepumpt werden, von wo sie durch die Durchbrüche des Innenrohres in den Ringspalt gelangt, dort die Filtermembran durchsetzt und das Filtermodul durch die Durchbrüche im Außenrohr wieder verlässt. Die Natur der Filtermembran ist dabei an die jeweilige Filtrationsaufgabe angepasst und kann beispielsweise als Folie, als poröse Membran, als Vlies, als Gewebe, als Mischung daraus oder in ähnlicher Weise ein- oder mehrlagig ausgestaltet sein. All diese für die vorliegende Erfindung nicht relevanten Ausgestaltungen seien hier unter dem Begriff der Filtermembran zusammengefasst. Für die Standzeit eines Filtermoduls, d.h. im Wesentlichen für das Gesamtvolumen, welches filtriert werden kann, bevor der Filter aufgrund von Filtrationsablagerungen maßgeblich an Effektivität einbüßt und ersetzt oder regeneriert werden muss, ist die Gesamtfläche der innerhalb des gegebenen Raumes des Ringspaltes zugänglichen Filtermembran entscheidend. Die bekannte Plissierung der Filtermembran dient der Maximierung ihrer Fläche innerhalb des Ringspaltes.

Die genannte Druckschrift verwendet zur Plissierung ein periodisches Muster aus Falten unterschiedlicher Faltenhöhe. Hierbei wird die Tatsache genutzt, dass der in Umfangsrichtung zur Verfügung stehende Raum von der Innenwand des Ringspaltes zu seiner Außenwand hin ansteigt. Als Falte wird im vorliegenden Kontext eine durch Knicken der Filtermembran entstehende, symmetrische Struktur verstanden, die sich von einer Faltenöffnung, welche durch zwei axial im Ringspalt erstreckte Faltenkanten gebildet ist, zu ihrer durch den Knick gebildeten Faltenspitze hin erstreckt. Die Faltenkanten sämtlicher Falten liegen bei gattungsgemäßen Filtermodulen am Außenrohr an; aufgrund der unterschiedlichen Faltenhöhen ragen die Faltenspitzen unterschiedlich weit nach radial innen in den Ringspalt hinein. Die Faltenspitzen der Falten derjenigen Faltenart mit der größten Faltenhöhe reichen bis zur Anlage am Innenrohr. Die Falten derjenigen Faltenarten mit kleinerer Faltenhöhe enden mit ihren Faltenspitzen auf unterschiedlichen Radien zwischen dem Innenrohr und dem Außenrohr. Jede Falte nimmt in Umfangsrichtung auf jedem Radius innerhalb ihres Erstreckungsbereichs einen Raum ein, der mindestens dem doppelten der Filtermembrandicke entspricht. Im Bereich zwischen ihrer Faltenspitze und dem Innenrohr nehmen diejenigen Falten, die nicht den gesamten Ringspalt radial durchsetzen, selbstverständlich keinen Raum in Umfangsrichtung ein. Durch Staffelung von Falten unterschiedlicher Faltenart, d.h. unterschiedlicher Faltenhöhe, lässt sich - so der Ansatz der gattungsgemäßen Druckschrift - für jeden Radius der in Umfangsrichtung zu Verfügung stehende Raum nahezu optimal füllen. Falten unterschiedlicher Faltenart werden daher zu Gruppen mit einem speziellen Muster, d.h. einer speziellen Abfolge unterschiedlicher Faltenlängen gruppiert, wobei sich die Gruppen in Umfangsrichtung periodisch wiederholen.

Auch die WO 2004/028659 A1 sowie die EP 1 595 590 A1, die JPS6417308 U und die JPS6061017 A verfolgen dasselbe Konzept.

Nachteilig bei den bekannten Plissierungen ist eine tatsächlich suboptimale Raumausnutzung. Insbesondere bei dicken Filtermembranen führt die Hinzufügung einer zusätzlichen Falte kleiner Faltenhöhe zu einem sprunghaften Auseinanderrücken der Faltenspitzen derjenigen Falten mit größter, d.h. bis zum Innenrohr ragender Faltenhöhe. Die innenrohrnahen Bereiche des Innenraums sind nicht mehr optimal gefüllt. Abhilfe kann geschaffen werden, durch die Verwendung überlanger Falten, d.h. durch die Verwendung von Falten, deren Faltenhöhe größer ist als die Breite des Ringspaltes. Die überlangen Falten werden beim Einführen in den Ringspalt im Bereich ihrer Faltenspitzen gestaucht und wölben sich beulenartig in Umfangsrichtung. Alternativ ist es, insbesondere aus der oben genannten, gattungsbildenden Druckschrift, auch bekannt, die plissierte Filtermembran unter Anwendung von Torsionskräften in den Ringspalt einzuführen, sodass die Falten C-bogenartig gebogen sind, um so Raum auch für die überlangen Falten zu schaffen. Beide Ansätze verkomplizieren jedoch das Einsetzen der plissierten Filtermembran in den Ringspalt; insbesondere ist der Einsatz von Spezialmaschinen unerlässlich.

Weiter ist aus der JP 2007-050313 eine Faltenfilterpatrone bekannt, deren Filtermaterial in Falten und Gegenfalten, die sich in umgekehrter Anordnung, also von ihren jeweiligen, radial innen anliegenden Faltenkanten nach radial außen zu ihrer jeweiligen Faltenspitze hin erstrecken, plissiert ist. Dabei überlappen die Spitzen der Falten und Gegenfalten, um so ein Umknicken der Falten zu verhindern. Auch diese bekannte Plissierung nutzt den vorhandenen Raum nicht optimal aus.

### Aufgabenstellung

Es ist die Aufgabe der vorliegenden Erfindung, eine Plissierung für Filtermembranen vorzuschlagen, die bei sehr guter Raumausnutzung leicht in den Ringspalt einsetzbar sind.

### Darlegung der Erfindung

Diese Aufgabe wird in Verbindung mit den Merkmalen des Oberbegriffs von Anspruch 1 dadurch gelöst, dass jede Gruppe (wenigstens) eine Gegenfalte aufweist, die sich von ihren am Innenrohr anliegenden Gegenfaltenkanten in Richtung auf das Außenrohr zu ihrer Gegenfaltenspitze hin erstreckt und deren Faltenhöhe kleiner als die oder gleich der Differenz zwischen der Breite des Ringspalts und der Faltenhöhe der Faltenart kleinster Faltenhöhe derselben Gruppe ist.

Bevorzugte Ausführungsformen der Erfindung sind Gegenstand der abhängigen Ansprüche.

Der Kern der Erfindung besteht darin, in jeder der - sich vorzugsweise periodisch wiederholenden - Faltengruppen mindestens eine zusätzliche Gegenfalte vorzusehen. Als Gegenfalte wird im vorliegenden Kontext eine durch Knicken der Filtermembran entstehende, symmetrische Struktur verstanden, die sich von einer Gegenfaltenöffnung, welche durch zwei axial im Ringspalt erstreckte und am Innenrohr anliegende Gegenfaltenkanten gebildet ist, zu ihrer durch den Knick gebildeten Gegenfaltenspitze hin erstreckt. Vereinfacht ausgedrückt könnte eine Gegenfalte also als eine umgekehrt angeordnete, sich von radial innen nach radial außen erstreckende Falte beschrieben werden; im vorliegenden Kontext soll jedoch begrifflich zwischen Falten (von radial außen nach radial innen erstreckt) und Gegenfalten (von radial innen nach radial außen erstreckt) unterschieden werden.

Selbstverständlich werden Falten und Gegenfalten durch Knicken derselben Filtermembran gebildet. Jede benachbart zu einer Falte angeordnete Gegenfalte muss also mit dieser über einen Filtermembranabschnitt verbunden sein. Gemäß der hier verwendeten Definition endet jede einzelne Falte in Umfangsrichtung an ihren am Außenrohr anliegenden Faltenkanten; jede Gegenfalte endet in Umfangsrichtung an ihren am Innenrohr anliegenden Gegenfaltenkanten. Der Filtermembranabschnitt, der eine Gegenfaltenkante mit der ihr in Umfangsrichtung nächst benachbarten Faltenkante verbindet, soll hier als Brückenabschnitt bezeichnet werden und ist selbst keiner Falte oder Gegenfalte zugeordnet.

Die Erfindung ermöglicht es, denjenigen innenrohrnahen Raum, der durch die Einführung von Falten submaximaler Länge entsteht, mit Filtermembran zu füllen, ohne hierzu auf die Verwendung von das Einsetzen der plissierten Filtermembran in den Ringspalt erschwerenden, überlangen Falten zurückgreifen zu müssen. Es resultiert also eine optimale Raumausnutzung bei gleichzeitig vereinfachtem Einsetzen des Plissees in den Ringspalt.

Diese grundlegende Idee der Gegenfalte lässt sich in der Praxis auf unterschiedliche Weise realisieren, wobei die unterschiedlichen Ausführungsformen unterschiedliche Vorteile haben.

Zunächst lassen sich unterschiedliche Familien von Ausführungsformen anhand der jeweils verwendeten Anzahl unterschiedlicher Faltenarten, d.h. unterschiedlicher Faltenhöhen, Unterscheiden. Als in der praktischen Anwendung vorteilhaft haben sich Ausführungsformen mit zwei, drei oder vier Faltenarten erwiesen. Die entsprechenden Familien von Ausführungsformen sollen hier als 2-Faltenarten-Familie, als 3-Faltenarten-Familie bzw. als 4-Faltenarten-Familie bezeichnet werden.

Bei den Ausführungsformen der 2-Faltenarten-Familie ist vorgesehen, dass die Falten in zwei Faltenarten unterschiedlicher Faltenhöhe unterteilt sind, nämlich eine größere, erste Faltenhöhe und eine kleinere, zweite Faltenhöhe. Der Vorteil der Verwendung nur zweier Faltenarten (zusätzlich zur Gegenfalte) liegt in der besonders einfachen Gestaltung und Ansteuerung der hierfür erforderlichen Plissiermaschine.

Bei der 3-Faltenarten-Familie ist vorgesehen, dass die Falten drei Faltenarten unterschiedlicher Faltenhöhe unterteilt sind, nämlich eine größte, erste Faltenhöhe, eine mittlere, zweite Faltenhöhe und eine kleinste, dritte Faltenhöhe. Solche Ausführungsformen erfordern zwar eine komplexere Ausgestaltung des Faltungsverfahrens bzw. der zur Faltung eingesetzten Plissiermaschine; andererseits ermöglichen sie durch eine feinere Abstufung der Faltenhöhen jedoch eine noch bessere Raumausnutzung innerhalb des Ringspaltes.

Eine noch feinere Abstufung lässt sich mit Ausführungsformen der 4-Faltenarten-Familie erreichen, bei der vorgesehen ist, dass die Falten in vier Faltenarten unterschiedlicher Faltenhöhe unterteilt sind, nämlich eine größte, erste Faltenhöhe, eine größere mittlere, zweite Faltenhöhe, eine kleinere mittlere, dritte Faltenhöhe und eine kleinste, vierte Faltenhöhe.

Günstigerweise liegen die Faltenspitzen der kürzesten Falten und die Gegenfaltenspitzen innerhalb eines Ringspaltes einer Breite von 10%, vorzugsweise 5% der Gesamtbreite des Ringspaltes um den mittig, d.h. abstandsgleich zwischen dem Außenrohr und dem Innenrohr gelegenen, hier als Mittelkreis bezeichneten virtuellen Kreis. Dabei enden die Faltenspitzen der kürzesten Falten und die Gegenfaltenspitzen auf demselben Radius oder es wird bevorzugt ein radialer Abstand zwischen den Faltenspitzen der kürzesten Falten und den Gegenfaltenspitzen eingehalten. Im Einbauzustand sind die Falten nämlich in Umfangsrichtung komprimiert, sodass bei Einhaltung des besagten Radialabstandes keine Materialstauung im Bereich der Spitzen entsteht, sondern sich kurze Falten und Gegenfalten raumoptimierend radial untereinander schmiegen können (unter entsprechender Wellung der zwischen der Gegenfalte und ihren unmittelbar benachbarten Falten gelegenen Brückenabschnitte). Auf die einzelne Gruppe bezogen kann diese Radialabstandsvorgabe allgemeingültig so formuliert werden, dass die Höhe der Gegenfalte jeder Gruppe gleich oder kleiner ist als die Differenz zwischen der Breite des Ringspalts und der Faltenhöhe der Faltenart kleinster Faltenhöhe derselben Gruppe.

Hinsichtlich der Faltenhöhe der längsten Falten (erste Faltenart) wird ausführungsformübergreifend bevorzugt, dass sie größer ist als die halbe Ringspaltbreite. Sie kann - ebenfalls ausführungsformübergreifend - so groß gestaltet sein, dass ihre Faltenspitze am Innenrohr anliegt. Sie kann jedoch durchaus auch kleiner ausgestaltet sein. In diesem Fall beträgt ihre Höhe bevorzugt 85 bis 95% der Breite des Ringspaltes. Eine größer als die Ringspaltbreite dimensionierte Faltenhöhe, die beim Einsetzen des Plissees in den Ringspalt zu einer Stauchung oder Krümmung der langen Falten führen würde, ist im Rahmen der vorliegenden Erfindung zwar nicht ausgeschlossen, würde aber deren Zielsetzung der Vereinfachung des Einsetzvorgangs in unnötiger Weise zuwiderlaufen und ist daher zumindest nicht bevorzugt.

Hinsichtlich der Dimensionierung der Gegenfalten ist vorgesehen, dass ihre Höhe geringer ist als die Breite des Ringspaltes, vorzugsweise 40 bis 60%, besonders bevorzugt 45 bis 55% der Breite des Ringspaltes beträgt. Bevorzugt haben alle Gegenfalten eines Plissees dieselbe Höhe.

Innerhalb der 2-Faltenarten-Familie haben sich verschiedene Faltungsmuster als besonders vorteilhaft erwiesen. Bevorzugt ist vorgesehen, dass die Falten- und Gegenfaltenanordnung innerhalb jeder Gruppe in Umfangsrichtung des Ringspaltes folgende Reihenfolge aufweist: eine Falte erster Faltenart, eine Falte zweiter Faltenart, eine Gegenfalte, eine Falte zweiter Faltenart. Jede Gruppe von Falten enthält bei dieser Ausführungsform also genau drei Falten und eine Gegenfalte, wobei die Gegenfalte beidseitig von je einer kurzen Falte (zweite Faltenart) flankiert ist. Sowohl die Gegenfalte als auch die beiden kurzen Falten ragen bevorzugt mit ihren Spitzen bis etwa zur Mitte des Ringspaltes.

Bei einer anderen Ausführungsform innerhalb der 2-Faltenarten-Familie ist vorgesehen, dass die Falten- und Gegenfaltenanordnung innerhalb jeder Gruppe in Umfangsrichtung des Ringspaltes folgende Reihenfolge aufweist: eine Falte zweiter Faltenart, eine Falte erster Faltenart, eine Gegenfalte, eine Falte erste Faltenart. Auch bei dieser Ausführungsform enthält jede Gruppe von Falten genau drei Falten und eine Gegenfalte, wobei die Gegenfalte allerdings von zwei langen Falten (erste Faltenart) flankiert ist. Deren Faltenspitzen ragen vorzugsweise nicht bis ganz zum Innenrohr. Allerdings überlappen sie bevorzugt die Gegenfalte in radialer Richtung deutlich.

Bei einer weiteren Ausführungsform der 2-Faltenarten-Familie ist vorgesehen, dass die Falten- und Gegenfaltenanordnung innerhalb jeder Gruppe in Umfangsrichtung des Ringspaltes folgende Reihenfolge aufweist: eine Falte zweiter Faltenart, eine Falte erster Faltenart, eine Gegenfalte. Diese Ausführungsform repräsentiert diejenige Variante innerhalb der 2-Faltenarten-Familie mit der geringsten Anzahl von Falten pro Gruppe. Auf das Gesamt-Plissee bezogen, führt diese Ausführungsform zur größten Anzahl von Gegenfalten.

Auch innerhalb der 3-Faltenarten-Familie sind unterschiedliche Gestaltungen von Faltenmustern innerhalb der Gruppen möglich. Bei einer bevorzugten Ausführungsform ist vorgesehen, dass die Falten- und Gegenfaltenanordnung innerhalb jeder Gruppe in Umfangsrichtung des Ringspaltes folgende Reihenfolge aufweist: eine Falte erster Faltenart, eine Gegenfalte, eine Falte dritter Faltenart, eine Falte zweiter Faltenart. Die Faltenhöhe der langen Falte (erste Faltenart) ist dabei bevorzugt so dimensioniert, dass ihre Faltenspitze am Innenrohr anliegt. Die Faltenhöhe der mittleren Falte (zweite Faltenart) ist bevorzugt so dimensioniert, dass sie mit der Gegenfalte einen deutlichen radialen Überlapp zeigt. Die Faltenhöhe der kurzen Falte (dritte Faltenart) ist bevorzugt so gestaltet, dass sie mit der Gegenfalte nicht überlappt, besonders bevorzugt besteht zwischen ihrer Faltenspitze und der Gegenfaltenspitze ein radialer Abstand. Bei der genannten Ausführungsform enthält jede Gruppe die minimal mögliche Anzahl von Falten innerhalb der 3-Faltenarten-Familie. Entsprechend ist die Anzahl von Gegenfalten im Gesamt-Plissee maximiert. Eine besonders bevorzugte Abwandlung dieses Faltenschemas weist zwischen jeder langen Falte und der ihr nächst benachbarten mittleren Falte eine weitere kurze Falte auf. Mit anderen Worten ist dabei vorgesehen, dass die Falten- und Gegenfaltenanordnung innerhalb jeder Gruppe in Umfangsrichtung des Ringspaltes folgende Reihenfolge aufweist: eine Falte erster Faltenart, eine Gegenfalte, eine Falte dritter Faltenart, eine Falte zweiter Faltenart, eine Falte dritter Art.

Bei einer anderen, bevorzugten Ausführungsform innerhalb der 3-Faltenarten-Familie ist vorgesehen, dass die Falten- und Gegenfaltenanordnung innerhalb jeder Gruppe in Umfangsrichtung des Ringspaltes folgende Reihenfolge aufweist: eine Falte zweiter Faltenart, eine Falte dritter Faltenart, eine Gegenfalte, eine Falte dritter Faltenart, eine Falte erster Faltenart. Bei dieser Ausführungsform ist die Gegenfalte beidseitig von je einer kurzen Falte (dritte Faltenart) flankiert. Hinsichtlich bevorzugter Dimensionierungen gilt das in Bezug auf die zuvor beschriebene Ausführungsform gesagte.

Als weitere günstige Ausführungsform innerhalb der 3-Faltenarten-Familie hat sich eine Variante erwiesen, bei der die Falten- und Gegenfaltenanordnung innerhalb jeder Gruppe in Umfangrichtung des Ringspaltes folgende Reihenfolge aufweist: eine Falte zweiter Faltenart, eine Falte dritter Faltenart, eine Falte erster Faltenart, eine Falte dritter Faltenart, eine Gegenfalte. Insbesondere innerhalb der für diese Ausführungsform besonders bevorzugten Dimensionierung, gemäß der die Faltenhöhe der langen Falte (erste Faltenart) kleiner ist als die Gesamtbreite des Ringspaltes, ist mit dieser Ausführungsform eine besonders feine Staffelung von Faltenlängen möglich, die insbesondere bei großen Innenrohrdurchmessern und vergleichsweise schmalem Ringspalt vorteilhaft ist. Hier nämlich sind die Umfangsunterschiede von Innen- und Außenrohr besonders gering, sodass die Einführung einer zusätzlichen Falte im radial äußeren Bereich zu einer erheblichen Lücke im radial inneren Bereich führt, was eine feine Staffelung der Raumfüllung für die unterschiedlichen Radien erforderlich oder zumindest vorteilhaft macht.

Innerhalb der 4-Faltenarten-Familie kann bevorzugt vorgesehen sein, dass die Falten- und Gegenfaltenanordnung innerhalb jeder Gruppe in Umfangsrichtung des Ringspaltes folgende Reihenfolge aufweist: eine Falte zweiter Faltenart, eine Falte dritter Faltenart, eine Falte erster Faltenart, eine Falte vierter Faltenart, eine Gegenfalte. Diese Ausführungsform unterscheidet sich also von der zuletzt beschriebenen Ausführungsform der 3-Faltenarten-Familie lediglich durch eine Aufspaltung deren kürzester Faltenart in zwei Faltenarten, nämlich die dritte und die vierte Faltenart. Entsprechend feiner wird die sich ergebende Staffelung.

Der Fachmann wird verstehen, dass die genannten Faltenmuster keine spezielle Leserichtung oder einen speziellen Startpunkt innerhalb des Gesamtplissees voraussetzen. Eine Aufzählung der einzelnen Faltenarten in gespiegelter oder zyklisch permutierter Reihenfolge wäre wortsinngemäß identisch mit den hier gewählten Definitionen. Ebenso wird der Fachmann verstehen, dass zur Ausbildung des Gesamtplissees Gruppen mit unterschiedlichen Faltenmustern kombiniert werden können.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung des Faltenmusters innerhalb einer Gruppe bei einer ersten Ausführungsform der 2-Faltenarten-Familie,
- Figur 2:: eine schematische Darstellung des Faltenmusters innerhalb einer Gruppe bei einer zweiten Ausführungsform der 2-Faltenarten-Familie,
- Figur 3:: eine schematische Darstellung des Faltenmusters innerhalb einer Gruppe bei einer dritten Ausführungsform der 2-Faltenarten-Familie,
- Figur 4:: eine schematische Darstellung des Faltenmusters innerhalb einer Gruppe bei einer vierten Ausführungsform der 2-Faltenarten-Familie,
- Figur 5:: eine schematische Darstellung des Faltenmusters innerhalb einer Gruppe bei einer ersten Ausführungsform der 3-Faltenarten-Familie,
- Figur 5a:: eine schematische Darstellung einer Abwandlung der Ausführungsform von Figur 5,
- Figur 6:: eine schematische Darstellung des Faltenmusters innerhalb einer Gruppe bei einer zweiten Ausführungsform der 3-Faltenarten-Familie,
- Figur 7:: eine schematische Darstellung des Faltenmusters innerhalb einer Gruppe bei einer dritten Ausführungsform der 3-Faltenarten-Familie
- Figur 8:: eine schematische Darstellung des Faltenmusters innerhalb einer Gruppe bei einer Ausführungsform der 4-Faltenarten-Familie,
- Figur 9:: eine naturgetreue Darstellung eines Ausschnitts eines gemäß dem Schema von Figur 1 gefalteten Plissees,
- Figur 10:: eine naturgetreue Darstellung eines Ausschnitts eines gemäß dem Schema von Figur 8 gefalteten Plissees,
- Figur 11:: eine naturgetreue Darstellung eines Ausschnitts eines gemäß dem Schema von Figur 4 gefalteten Plissees und
- Figur 12:: eine naturgetreue Darstellung eines Ausschnitts eines gemäß dem Schema von Figur 5a gefalteten Plissees und
- Figur 13:: eine naturgetreue Darstellung eines Ausschnitts eines gemäß dem Schema von Figur 7 gefalteten Plissees.

### Beschreibung bevorzugter Ausführungsformen

Gleiche Bezugszeichen in den Figuren deuten auf gleiche oder analoge Elemente hin.

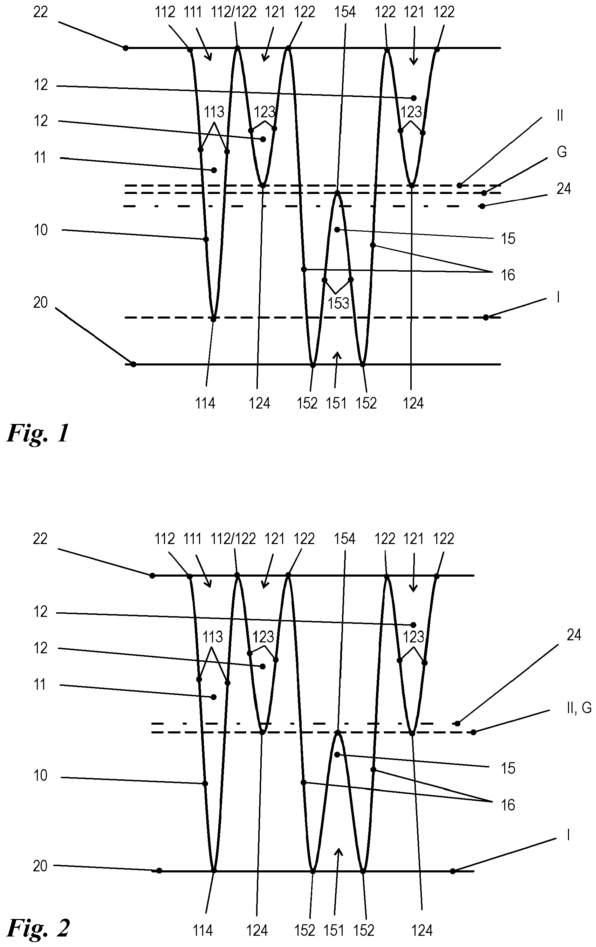

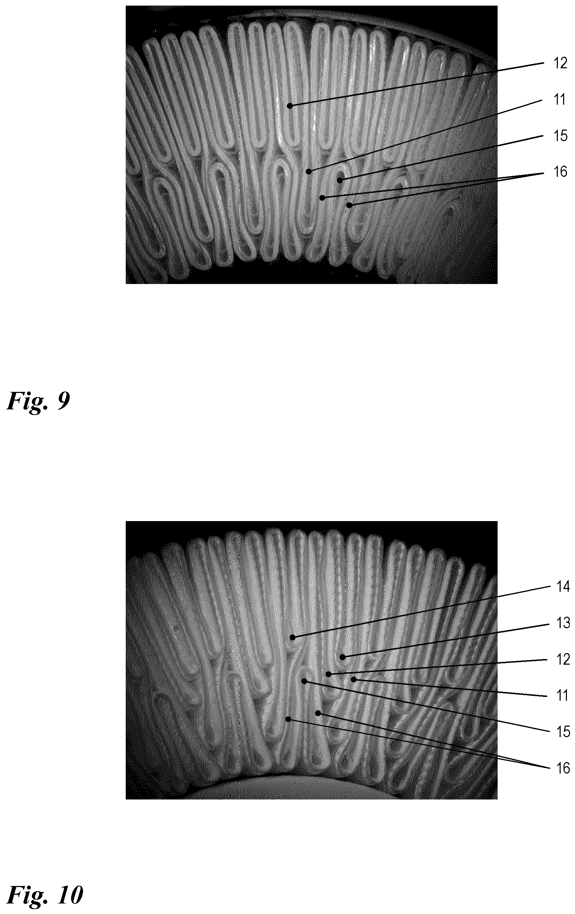

Die Figuren 1 bis 8 zeigen in schematischer Darstellung Faltenmuster innerhalb unterschiedlicher Ausführungsformen je einer Faltengruppe. Zur Ausbildung des Gesamtplissees reihen sich solche Gruppen oder Kombinationen von Gruppen in vorzugsweise periodischer Abfolge aneinander. Die Figuren 9 bis 12 zeigen in naturgetreuer Darstellung Ausschnitte des Gesamtplissees in seiner komprimierten und in einen Ringspalt zwischen zwei nicht gesondert dargestellten Rohren (Innen- und Außenrohr) eines erfindungsgemäßen Filtermoduls eingesetzten Montageendstellung.

Die Schemata der Figuren 1 bis 8 sind sämtlich wie folgt zu lesen: Dargestellt ist jeweils eine Filtermembran 10 zwischen einem Innenrohr 20 und einem Außenrohr 22, die in den Figuren 1 bis 8 abgewickelt, d.h. entkrümmt dargestellt sind. Strichpunktiert dargestellt ist der Mittelkreis 24, der mittig, d.h. abstandsgleich zwischen dem Innenrohr 20 und dem Außenrohr 22 verläuft. Die gestrichelt dargestellten Hilfslinien markieren die Spitzenkreise, d.h. sie dienen der Illustration der radialen Lage der Falten- bzw. Gegenfaltenspitzen, und sind mit römischen Ziffern I, II, III, IV entsprechend der jeweiligen Faltenart bzw. mit G als Hinweis auf die Gegenfalte bezeichnet. Dabei bezeichnet 11 eine Falte erster Faltenart, 12 eine Falte zweiter Faltenart, 13 eine Falte dritter Faltenart, 14, eine Falte vierter Faltenart und 15 eine Gegenfalte. Besondere Bereiche der Falten 11, 12, 13, 14 und Gegenfalten 15 sind durch dreistellige arabische Zahlen gekennzeichnet, deren erste zwei Ziffern jeweils die fragliche Falte 11, 12, 13, 14 bzw. Gegenfalte 15 bezeichnen und deren dritte Ziffer den besonderen Bereich spezifiziert. Hierbei bedeutet xx1 (Gegen-)Faltenöffnung, xx2 (Gegen-)Faltenkante, xx3 (Gegen-)Faltenflanke und xx4 (Gegen-)Faltenspitze. Mit 16 sind die Brückenabschnitte zwischen einer Gegenfalte 15 und einer ihr nächst benachbarten Falte 11, 12, 13, 14 bezeichnet.

Sämtliche Falten 11, 12, 13, 14 erstrecken sich vom Außenrohr 22 in Richtung auf das Innenrohr 20 in den zwischen beiden gebildeten Ringspalt hinein. Die Gegenfalten 15 erstrecken sich in umgekehrter Richtung vom Innenrohr 20 auf das Außenrohr 22 hin in den Ringspalt hinein. Sämtliche Falten 11, 12, 13, 14 beginnen gemäß der hier verwendeten Definition an ihrer jeweiligen Faltenöffnung 111, 121, 131, 141, die zwischen zwei am Außenrohr 22 anliegenden Faltenkanten 112, 122, 132, 142 gebildet ist, verlaufen entlang ihrer Faltenflanken 113, 123, 133, 143 und enden an ihrer jeweiligen Faltenspitze 114, 124, 134, 144. Die Gegenfalten 15 beginnen gemäß der hier verwendeten Definition an ihrer jeweiligen Gegenfaltenöffnung 151, die zwischen zwei am Innenrohr 20 anliegenden Gegenfaltenkanten 152 gebildet ist, verlaufen entlang ihrer Gegenfaltenflanken 153 und enden an ihrer jeweiligen Gegenfaltenspitze 154.

Figur 1 zeigt eine bevorzugte Ausführungsform der 2-Faltenarten-Familie. Die Filtermembran 10 weist Falten zweier Arten auf, nämlich lange Falten 11 erster Faltenart und kurze Falten 12 zweiter Faltenart. Die Gegenfalten 15 sind jeweils von zwei kurzen Falten 12 flankiert. Die Gegenfaltenkanten 152 sind mit den in Umfangsrichtung nächst benachbarten Faltenkanten 122 über die Brückenabschnitte 16 verbunden. Die Dimensionierung der Faltenhöhen ist so gewählt, dass die Faltenspitzen 114 der langen Falten 11 deutlich über den Mittelkreis 24, jedoch nicht bis zum Innenrohr 20 ragen. Die Faltenspitzen 124 der kurzen Falten 12 ragen nicht ganz bis zum Mittelkreis 24. Die Gegenfaltenspitzen 154 ragen hingegen geringfügig über den Mittelkreis 24 hinaus, liegen jedoch radial von den Faltenspitzen 124 der kurzen Falten 12 beabstandet.

Eine fotographische Darstellung eines gemäß dem Faltungsschema von Figur 1 gefalteten Plissees in Einbaulage in einem erfindungsgemäßen Filtermodul ist in Figur 9 dargestellt.

Das Faltungsschema von Figur 2 unterscheidet sich von demjenigen von Figur 1 in vier Merkmalen: erstens ragen die Faltenspitzen 114 der langen Falten 11 bis zum Innenrohr 20; zweitens ragen die Faltenspitzen 124 der kurzen Falten 12 über den Mittelkreis 24 hinaus; drittens ragen die Gegenfaltenspitzen 154 nicht an den Mittelkreis 24 heran; und viertens ist kein radialer Abstand zwischen den Faltenspitzen 124 der kurzen Falten 12 und den Gegenfaltenspitzen 154 belassen.

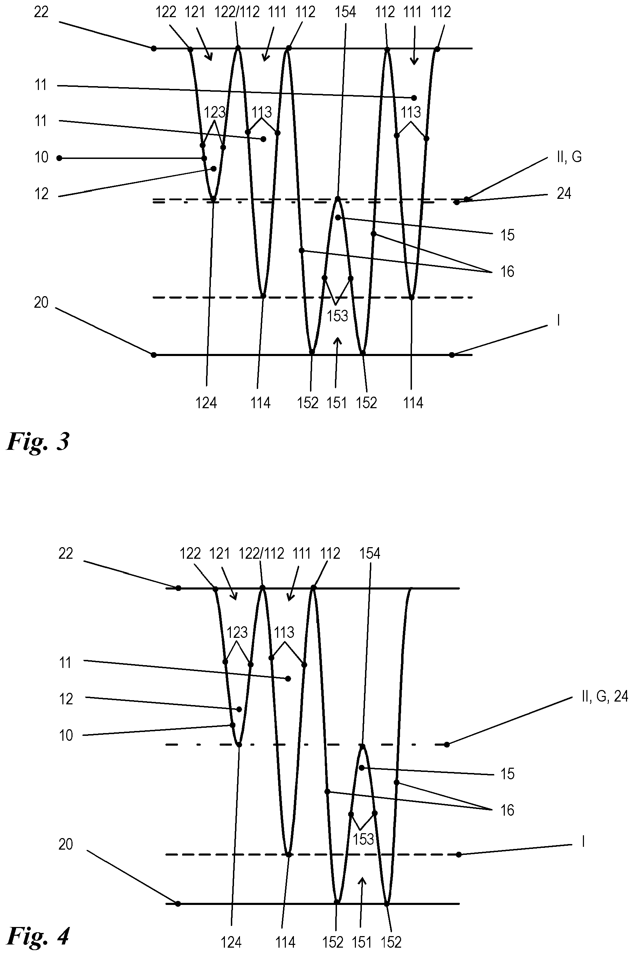

Figur 3 zeigt eine weitere Ausführungsform der 2-Faltenarten-Familie. Hier sind die Gegenfalten 15 jeweils von zwei langen Falten 11 flankiert. Die Faltenspitzen der 124 der kurzen Falten 12 enden auf demselben Radius wie die Gegenfaltenspitzen 154. Im Übrigen kann auf die Erläuterung zu Figur 1 verwiesen werden.

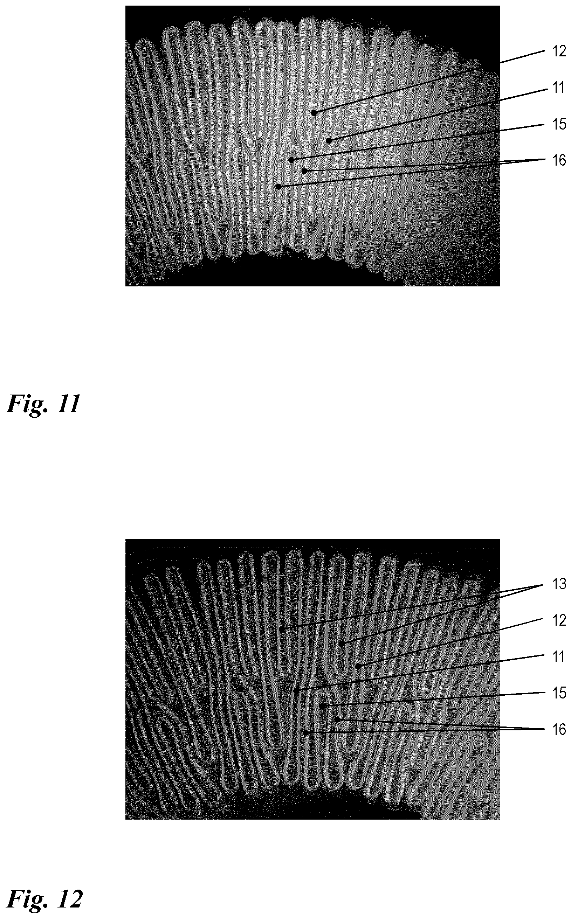

Figur 4 zeigt eine weitere Ausführungsform der 2-Faltenarten-Familie. Sie unterscheidet sich von der Ausführungsform gemäß Figur 3 durch den Wegfall einer zweiten langen Falte 11 pro Gruppe (rechts neben der jeweiligen Gegenfalte 15). Diese Variante maximiert innerhalb der 2-Faltenarten-Familie die im Gesamtplissee vorhandene Anzahl von Gegenfalten 15, da die Gesamtzahl von Falten 11, 12 pro Gruppe auf zwei minimiert ist. Figur 11 zeigt eine fotographische Darstellung eines entsprechenden Plissees in Einbaulage.

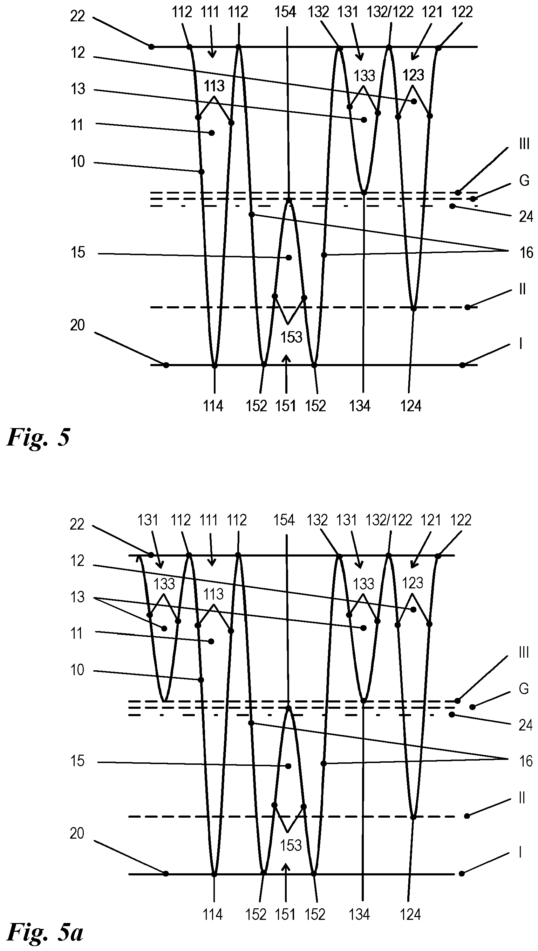

Figur 5 zeigt eine bevorzugte Ausführungsform der 3-Faltenarten-Familie. Die Filtermembran 10 weist Falten dreier Arten auf, nämlich lange Falten 11 erster Faltenart, mittlere Falten 12 zweiter Faltenart und kurze Falten 13 dritter Faltenart. Die Gegenfalten 15 sind jeweils von einer langen Falte 11 und einer kurzen Falte 13 flankiert. Die Gegenfaltenkanten 152 sind mit den in Umfangsrichtung nächst benachbarten Faltenkanten 112 bzw. 132 über die Brückenabschnitte 16 verbunden. Die Dimensionierung der Faltenhöhen ist so gewählt, dass die Faltenspitzen 124 der mittleren Falten 12 deutlich über den Mittelkreis 24, jedoch nicht bis zum Innenrohr 20 ragen. Die Faltenspitzen 114 der langen Falten 11 ragen bis zum Innenrohr 20, an dem sie anliegen. Die Faltenspitzen 134 der kurzen Falten 13 ragen nicht ganz bis zum Mittelkreis 24. Die Gegenfaltenspitzen 154 ragen hingegen geringfügig über den Mittelkreis 24 hinaus, liegen jedoch radial von den Faltenspitzen 134 der kurzen Falten 13 beabstandet. Diese Variante maximiert innerhalb der 3-Faltenarten-Familie die im Gesamtplissee vorhandene Anzahl von Gegenfalten 15, da die Gesamtzahl von Falten 11, 12, 13 pro Gruppe auf drei minimiert ist. Figur 5a und Figur 12 zeigen ein ganz ähnliches Faltenschema, bei dem sich jedoch zwischen jeder langen Falte 11 und der ihr nächst benachbarten mittleren Falte 12 eine weitere kurze Falte 13 befindet.

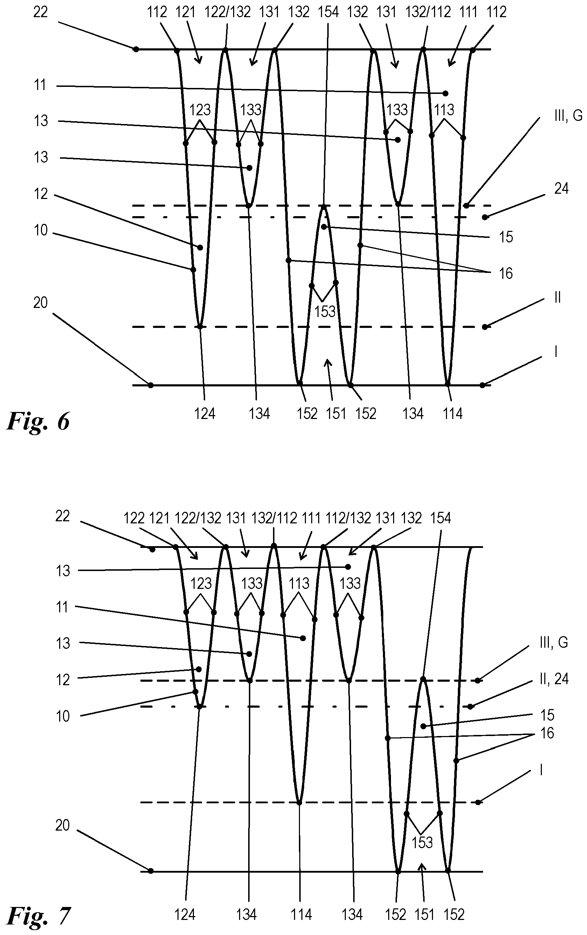

Das Faltungsschema von Figur 6 unterscheidet sich von demjenigen von Figur 5 im Wesentlichen dadurch, dass die Gegenfalten 15 jeweils von zwei kurzen Falten 13 flankiert sind, denen jeweils eine mittlere Falte 12 bzw. eine lange Falte 11 benachbart ist. Die Dimensionierung der Faltenhöhen entspricht derjenigen von Figur 5 mit dem Unterschied, dass die Gegenfaltenspitzen 154 und die Faltenspitzen 134 der kurzen Falten 13 auf demselben Radius liegen.

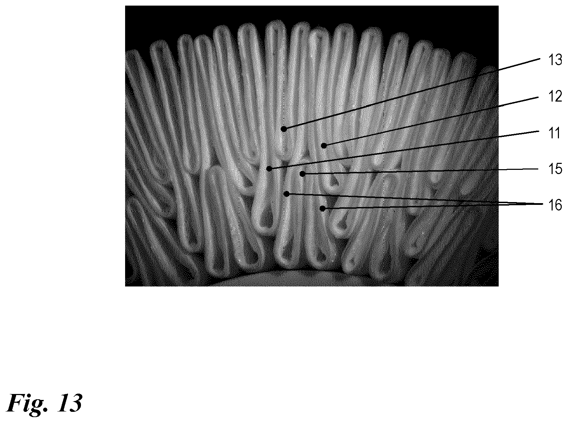

Bei der Ausführungsform von Figur 7, die ebenfalls der 3-Faltenarten-Familie zuzuordnen ist, wird eine noch feinere Abstufung dadurch erzielt, dass selbst die langen Falten 11 nicht bis zum Innenrohr 20 ragen. Die mittleren Falten 12 ragen nur bis zum Mittelkreis 24. Die Gegenfalten 15 sind jeweils von einer kurzen Falte 13 und einer mittleren Falte 12 flankiert. Im Übrigen kann auf das oben zu Figur 6 gesagte verwiesen werden. Figur 13 zeigt eine fotographische Darstellung eines entsprechenden Plissees in Einbaulage.

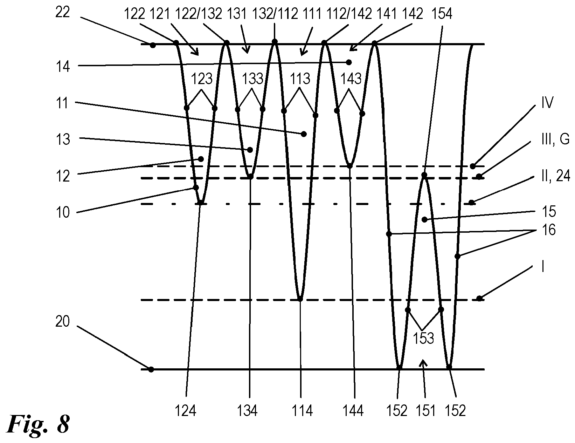

Figur 8 zeigt eine bevorzugte Ausführungsform der 4-Faltenarten-Familie. Die Filtermembran 10 weist Falten von vier Arten auf, nämlich lange Falten 11 erster Faltenart, größere mittlere Falten 12 zweiter Faltenart und kleinere mittlerer Falten 13 dritter Faltenart und kurze Falten 14 vierter Faltenart. Von der Ausführungsform von Figur 7 unterscheidet sich diese Ausführungsform im Wesentlichen durch eine Aufspaltung der dortigen kurzen Falten 13 in die hiesigen kurzen Falten 14 und die kleineren mittleren Falten 13. Die Gegenfalten 15 sind jeweils von einer kurzen Falte 14 und einer größeren mittleren Falte 12 flankiert. Die Gegenfaltenkanten 152 sind mit den in Umfangsrichtung nächst benachbarten Faltenkanten 142 bzw. 122 über die Brückenabschnitte 16 verbunden. Die Dimensionierung der Faltenhöhen ist so gewählt, dass die Faltenspitzen 124 der größeren mittleren Falten 12 bis zum Mittelkreis 24 ragen. Die Faltenspitzen 114 der langen Falten 11 ragen deutlich über den Mittelkreis 24, jedoch nicht bis zum Innenrohr 20. Die Gegenfaltenspitzen 154 ragen ebenfalls über den Mittelkreis 24 hinaus, liegen auf demselben Radius wie die Faltenspitzen 134 der kleineren mittleren Falten 13 und sind von den Faltenspitzen 144 der kurzen Falten 14 radial beabstandet. Diese Variante maximiert innerhalb der 4-Faltenarten-Familie die im Gesamtplissee vorhandene Anzahl von Gegenfalten 15, da die Gesamtzahl von Falten 11, 12, 13, 14 pro Gruppe auf vier minimiert ist. Figur 10 zeigt eine fotographische Darstellung dieses Faltungsschemas.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere können die in den Figuren 1 bis 8 dargestellten Faltenmuster auch invertiert und/oder zyklisch permutiert realisiert werden. Ebenso ist zur Ausbildung eines Gesamtplissees die Kombination mehrerer Faltenmuster denkbar.

### Bezugszeichenliste

- 10: Filtermembran
- 11: Falten erster Art, lange Falten
- 111: Faltenöffnung von 11
- 112: Faltenkante von 11
- 113: Faltenflanke von 11
- 114: Faltenspitze von 11
- 12: Falten zweiter Art
- 121: Faltenöffnung von 12
- 122: Faltenkante von 12
- 123: Faltenflanke von 12
- 124: Faltenspitze von 12
- 13: Falten dritter Art
- 131: Faltenöffnung von 13
- 132: Faltenkante von 13
- 133: Faltenflanke von 13
- 134: Faltenspitze von 13
- 14: Falten vierter Art
- 141: Faltenöffnung von 14
- 142: Faltenkante von 14
- 143: Faltenflanke von 14
- 144: Faltenspitze von 14
- 15: Gegenfalte
- 151: Gegenfaltenöffnung von 15
- 152: Gegenfaltenkante von 15
- 153: Gegenfaltenflanke von 15
- 154: Gegenfaltenspitze von 15
- 16: Brückenabschnitt
- 20: Innenrohr
- 22: Außenrohr
- 24: Mittelkreis
- I, II, III, IV: Spitzenkreise von 114, 124, 134, 144
- G: Spitzenkreis von 154

## Patentansprüche

1. Filtermodul, umfassend ein durchbrochenes Innenrohr (20) und ein das Innenrohr (20) konzentrisch umgreifendes, durchbrochenes Außenrohr (22), die zwischen sich einen Ringspalt bilden, in welchem eine in Falten (11, 12, 13, 14) plissierte Filtermembran (10) angeordnet ist, deren in mehrere Faltenarten unterschiedlicher Faltenhöhe unterteilte Falten (11, 12, 13, 14) sich von ihren jeweiligen, am Außenrohr (22) anliegenden Faltenkanten (111, 121, 131, 141) in Richtung auf das Innenrohr (20) zu ihrer jeweiligen Faltenspitze (114, 124, 134, 144) hin erstrecken und als Gruppen von Falten (11, 12, 13, 14) unterschiedlicher Faltenarten entlang des Umfangs des Ringspaltes angeordnet sind, **dadurch gekennzeichnet, dass** jede Gruppe eine Gegenfalte (15) aufweist, die sich von ihren am Innenrohr (20) anliegenden Gegenfaltenkanten (151) in Richtung auf das Außenrohr (22) zu ihrer Gegenfaltenspitze (154) hin erstreckt und deren Faltenhöhe kleiner als die oder gleich der Differenz zwischen der Breite des Ringspalts und der Faltenhöhe der Faltenart kleinster Faltenhöhe derselben Gruppe ist.

2. Filtermodul nach Anspruch 1, **dadurch gekennzeichnet, dass** die Falten (11, 12) in zwei Faltenarten unterschiedlicher Faltenhöhe unterteilt sind, nämlich eine größere, erste Faltenhöhe und eine kleinere, zweite Faltenhöhe.

3. Filtermodul nach Anspruch 2, **dadurch gekennzeichnet, dass** die Falten- und Gegenfaltenanordnung innerhalb jeder Gruppe in Umfangsrichtung des Ringspaltes folgende Reihenfolge aufweist: eine Falte (11) erster Faltenart, eine Falte (12) zweiter Faltenart, eine Gegenfalte (15), eine Falte (12) zweiter Art.

4. Filtermodul nach Anspruch 2,
**dadurch gekennzeichnet,**
**dass** die Falten- und Gegenfaltenanordnung innerhalb jeder Gruppe in Umfangsrichtung des Ringspaltes folgende Reihenfolge aufweist: eine Falte (12) zweiter Faltenart, eine Falte (11) erster Faltenart, eine Gegenfalte (15), eine Falte (11) erster Art.

5. Filtermodul nach Anspruch 2,
**dadurch gekennzeichnet,**
**dass** die Falten- und Gegenfaltenanordnung innerhalb jeder Gruppe in Umfangsrichtung des Ringspaltes folgende Reihenfolge aufweist: eine Falte (12) zweiter Faltenart, eine Falte (11) erster Faltenart, eine Gegenfalte (15).

6. Filtermodul nach einem der vorangehenden Ansprüche,
**dadurch gekennzeichnet,**
**dass** die Falten (11, 12, 13) in drei Faltenarten unterschiedlicher Faltenhöhe unterteilt sind, nämlich eine größte, erste Faltenhöhe, eine mittlere, zweite Faltenhöhe und eine kleinste, dritte Faltenhöhe.

7. Filtermodul nach Anspruch 6,
**dadurch gekennzeichnet,**
**dass** die Falten- und Gegenfaltenanordnung innerhalb jeder Gruppe in Umfangsrichtung des Ringspaltes folgende Reihenfolge aufweist: eine Falte (11) erster Faltenart, eine Gegenfalte (15), eine Falte (13) dritter Faltenart, eine Falte (12) zweiter Faltenart.

8. Filtermodul nach Anspruch 6,
**dadurch gekennzeichnet,**
**dass** die Falten- und Gegenfaltenanordnung innerhalb jeder Gruppe in Umfangsrichtung des Ringspaltes folgende Reihenfolge aufweist: eine Falte (12) zweiter Faltenart, eine Falte (13) dritter Faltenart, eine Gegenfalte (15), eine Falte (13) dritter Faltenart, eine Falte (11) erster Faltenart.

9. Filtermodul nach Anspruch 6,
**dadurch gekennzeichnet,**
**dass** die Falten- und Gegenfaltenanordnung innerhalb jeder Gruppe in Umfangsrichtung des Ringspaltes folgende Reihenfolge aufweist: eine Falte (12) zweiter Faltenart, eine Falte (13) dritter Faltenart, eine Falte (11) erster Faltenart, eine Falte (13) dritter Faltenart, eine Gegenfalte (15).

10. Filtermodul nach einem der vorangehenden Ansprüche,
**dadurch gekennzeichnet,**
**dass** die Falten (11, 12, 13, 14) in vier Faltenarten unterschiedlicher Faltenhöhe unterteilt sind, nämlich eine größte, erste Faltenhöhe, eine größere mittlere, zweite Faltenhöhe, eine kleinere mittlere, dritte Faltenhöhe und eine kleinste, vierte Faltenhöhe.

11. Filtermodul nach Anspruch 10,
**dadurch gekennzeichnet,**
**dass** die Falten- und Gegenfaltenanordnung innerhalb jeder Gruppe in Umfangsrichtung des Ringspaltes folgende Reihenfolge aufweist: eine Falte (12) zweiter Faltenart, eine Falte (13) dritter Faltenart, eine Falte (11) erster Faltenart, eine Falte (14) vierter Faltenart, eine Gegenfalte (15).

12. Filtermodul nach einem der vorangehenden Ansprüche,
**dadurch gekennzeichnet,**
**dass** die Höhen aller Gegenfalten (15) gleich sind.

13. Filtermodul nach einem der vorangehenden Ansprüche,
**dadurch gekennzeichnet,**
**dass** die Faltenhöhe der Faltenart größter Faltenhöhe kleiner als die oder gleich der Breite des Ringspaltes ist.

## Claims

1. A filter module, comprising
a perforated inner tube (20) and a perforated outer tube (22) concentrically surrounding the inner tube (20), said inner tube and outer tube forming an annular gap between each other, in which a filter membrane (10) pleated into folds (11, 12, 13, 14) is arranged, wherein the folds (11, 12, 13, 14) divided into several fold types of differing fold height extend from their respective fold edges (111, 121, 131, 141) resting against the outer tube (22) in the direction of the inner tube (20) to their respective fold tips (114, 124, 134, 144) and are arranged as groups of folds (11, 12, 13, 14) of differing fold types along the circumference of the annular gap,
**characterized in that**
each group has a mating fold (15) which extends from its mating fold edges (151) resting against the inner tube (20) in the direction of the outer tube (22) to their mating fold tips (154) and the fold height of which is less than or equal to the difference between the width of the annular gap and the fold height of the smallest fold height of the same group.

2. The filter module according to claim 1, **characterized in that** the folds (11, 12) are divided into two fold types of differing fold height, specifically a larger, first fold height and a smaller, second fold height.

3. The filter module according to claim 2, **characterized in that** the fold and mating fold arrangement within each group in the circumferential direction of the annular gap has the following sequence: a fold (11) of the first fold type, a fold (12) of the second fold type, a mating fold (15), a fold (12) of the second type.

4. The filter module according to claim 2, **characterized in that** the fold and mating fold arrangement within each group in the circumferential direction of the annular gap has the following sequence: a fold (12) of the second fold type, a fold (11) of the first fold type, a mating fold (15), a fold (11) of the first type.

5. The filter module according to claim 2, **characterized in that** the fold and mating fold arrangement within each group in the circumferential direction of the annular gap has the following sequence: a fold (12) of the second fold type, a fold (11) of the first fold type, a mating fold (15).

6. The filter module according to any of the foregoing claims, **characterized in that** the folds (11, 12, 13) are divided into three fold types of differing fold height, specifically a largest, first fold height, a medium, second fold height and a smallest, third fold height.

7. The filter module according to claim 6, **characterized in that** the fold and mating fold arrangement within each group in the circumferential direction of the annular gap has the following sequence: a fold (11) of the first fold type, a mating fold (15), a fold (13) of the third fold type, a fold (12) of the second fold type.

8. The filter module according to claim 6, **characterized in that** the fold and mating fold arrangement within each group in the circumferential direction of the annular gap has the following sequence: a fold (12) of the second fold type, a fold (13) of the third fold type, a mating fold (15), a fold (13) of the third fold type, a fold (11) of the first fold type.

9. The filter module according to claim 6, **characterized in that** the fold and mating fold arrangement within each group in the circumferential direction of the annular gap has the following sequence: a fold (12) of the second fold type, a fold (13) of the third fold type, a fold (11) of the first fold type, a fold (13) of the third fold type, a mating fold (15).

10. The filter module according to any of the foregoing claims, **characterized in that** the folds (11, 12, 13, 14) are divided into four fold types of differing fold height, specifically a largest, first fold height, a larger medium, second fold height, a smaller medium, third fold height and a smallest, fourth fold height.

11. The filter module according to claim 10, **characterized in that** the fold and mating fold arrangement within each group in the circumferential direction of the annular gap has the following sequence: a fold (12) of the second fold type, a fold (13)of the third fold type, a fold (11) of the first fold type, a fold (14) of the fourth fold type, a mating fold (15).

12. The filter module according to any of the foregoing claims, **characterized in that** the heights of all mating folds (15) are equal.

13. The filter module according to any of the foregoing claims, **characterized in that** the fold height of the fold type of the largest fold height is less than or equal to the width of the annular gap.

## Revendications

1. Module de filtre, qui comprend
un tube intérieur (20) ajouré et un tube extérieur (22) ajouré qui encercle le tube intérieur (20) de façon concentrique, qui forment entre eux un espace annulaire dans lequel est agencée une membrane de filtre (10) plissée en plis (11, 12, 13, 14),
dont les plis (11, 12, 13, 14) subdivisés en plusieurs sortes de pli de hauteurs de pli différentes s'étendent depuis leurs bords de pli (111, 121, 131, 141) respectifs adjacents au tube extérieur (22) en direction du tube intérieur (20) vers leur bord de pointe (114, 124, 134, 144) respectif et sont agencés en tant que groupes de plis (11, 12, 13, 14) de sortes de pli différentes le long de la circonférence de l'espace annulaire,
**caractérisé en ce que**
chaque groupe présente un contre-pli (15) qui s'étend depuis leurs bords de contre-pli (151) adjacents au tube intérieur (20) en direction du tube extérieur (22) vers sa pointe de contre-pli (154) et dont la hauteur de pli est inférieure ou égale à la différence entre la largeur de l'espace annulaire et la hauteur de pli de la sorte de pli de la plus petite hauteur de pli du même groupe.

2. Module de filtre selon la revendication 1,
**caractérisé en ce que**
les plis (11, 12) sont subdivisés en deux sortes de pli de hauteurs de pli différentes, en l'occurrence une première hauteur de pli plus grande et une deuxième hauteur de pli plus petite.

3. Module de filtre selon la revendication 2, **caractérisé en ce que**
l'agencement de plis et de contre-plis à l'intérieur de chaque groupe présente la séquence suivante dans la direction circonférentielle de l'espace annulaire : un pli (11) de la première sorte de pli, un pli (12) de la deuxième sorte de pli, un contre-pli (15), un pli (12) de la deuxième sorte.

4. Module de filtre selon la revendication 2,
**caractérisé en ce que**
l'agencement de plis et de contre-plis à l'intérieur de chaque groupe présente la séquence suivante dans la direction circonférentielle de l'espace annulaire : un pli (12) de la deuxième sorte de pli, un pli (11) de la première sorte de pli, un contre-pli (15), un pli (11) de la première sorte.

5. Module de filtre selon la revendication 2,
**caractérisé en ce que**
l'agencement de plis et de contre-plis à l'intérieur de chaque groupe présente la séquence suivante dans la direction circonférentielle de l'espace annulaire : un pli (12) de la deuxième sorte de pli, un pli (11) de la première sorte de pli, un contre-pli (15).

6. Module de filtre selon l'une des revendications précédentes,
**caractérisé en ce que**
les plis (11, 12, 13) sont subdivisés en trois sortes de pli de hauteurs de pli différentes, en l'occurrence une première hauteur de pli la plus grande, une deuxième hauteur de pli centrale et une troisième hauteur de pli la plus petite.

7. Module de filtre selon la revendication 6,
**caractérisé en ce que**
l'agencement de plis et de contre-plis à l'intérieur de chaque groupe présente la séquence suivante dans la direction circonférentielle de l'espace annulaire: un pli (11) de la première sorte de pli, un contre-pli (15), un pli (13) de la troisième sorte de pli, un pli (12) de la deuxième sorte de pli.

8. Module de filtre selon la revendication 6,
**caractérisé en ce que**
l'agencement de plis et de contre-plis à l'intérieur de chaque groupe présente la séquence suivante dans la direction circonférentielle de l'espace annulaire: un pli (12) de la deuxième sorte de pli, un pli (13) de la troisième sorte de pli, un contre-pli (15), un pli (13) de la troisième sorte de pli, un pli (11) de la première sorte de pli.

9. Module de filtre selon la revendication 6,
**caractérisé en ce que**
l'agencement de plis et de contre-plis à l'intérieur de chaque groupe présente la séquence suivante dans la direction circonférentielle de l'espace annulaire : un pli (12) de la deuxième sorte de pli, un pli (13) de la troisième sorte de pli, un pli (11) de la première sorte de pli, un pli (13) de la troisième sorte de pli, un contre-pli (15).

10. Module de filtre selon l'une des revendications précédentes,
**caractérisé en ce que**
les plis (11, 12, 13, 14) sont subdivisés en quatre sortes de pli de hauteurs de pli différentes, en l'occurrence une première hauteur de pli la plus grande, une deuxième hauteur de pli centrale plus grande, une troisième hauteur de pli centrale plus petite et une quatrième hauteur de pli la plus petite.

11. Module de filtre selon la revendication 10,
**caractérisé en ce que**
l'agencement de plis et de contre-plis à l'intérieur de chaque groupe présente la séquence suivante dans la direction circonférentielle de l'espace annulaire : un pli (12) de la deuxième sorte de pli, un pli (13) de la troisième sorte de pli, un pli (11) de la première sorte de pli, un pli (14) de la quatrième sorte de pli, un contre-pli (15).

12. Module de filtre selon l'une des revendications précédentes,
**caractérisé en ce que**
les hauteurs de tous les contre-plis (15) sont égales.

13. Module de filtre selon l'une des revendications précédentes,
**caractérisé en ce que**
la hauteur de pli de la sorte de pli avec la hauteur de pli la plus grande est inférieure ou égale à la largeur de l'espace annulaire.
